(19) Europäisches Patentamt / European Patent Office / Office européen des brevets

(11) EP 2 592 104 A1

# (12) EUROPEAN PATENT APPLICATION

(43) Date of publication:
**15.05.2013 Bulletin 2013/20**

(21) Application number: **11188634.7**

(22) Date of filing: **10.11.2011**

(51) Int Cl.:
***C08G 65/40*** *(2006.01)* ***C08G 75/23*** *(2006.01)*
***B01D 69/12*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Solvay Specialty Polymers USA, LLC.**
**Alpharetta, GA 30005-3914 (US)**

(72) Inventors:
- **Sriram, Suresh**
  **ALPHARETTA, GA Georgia 30022 (US)**
- **Hoppin, Charles R.**
  **ALPHARETTA, GA Georgia 30022 (US)**
- **Taylor, Narmandakh**
  **ALPHARETTA, 30004 (US)**

(74) Representative: **Benvenuti, Federica et al**
**SOLVAY SA**
**Intellectual Assets Management**
**Rue de Ransbeek, 310**
**1120 Bruxelles (BE)**

## (54) Polyarylene ether ketones

(57) The invention pertains to novel aromatic ether ketone polymers derived from bio-based feed-stocks, comprising recurring units of formula ($R_b$):

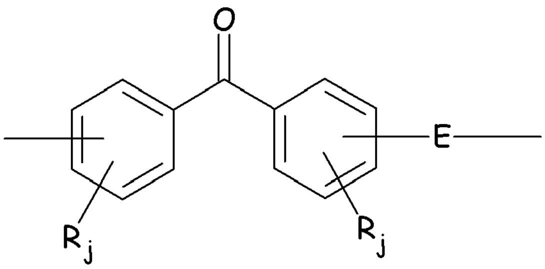

(formula $R_b$) wherein:
- E is selected from the group consisting of:

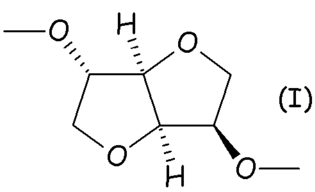
(I)

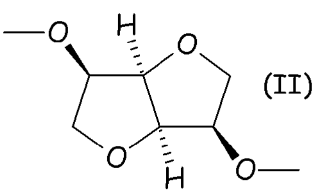
(II)

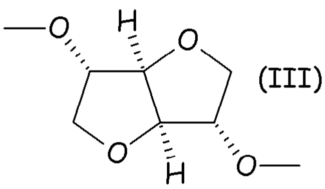
(III)

- each of R, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j is zero or is an integer from 1 to 4, to a process for their manufacture and to the use of the same for manufacturing shaped articles.



Printed by Jouve, 75001 PARIS (FR)

## Description

### Technical Field

The invention pertains to novel polyarylene ether ketones derived from bio-based feed-stocks, to a process for their manufacture and to their use for the manufacture of shaped articles.

### Background Art

The development of renewable bio-based chemicals has the potential to reduce the amount of petroleum consumed in the chemical industry and also to open new high-value-added markets to agriculture; 1,4:3,6-dianhydrohexitols are examples of such chemicals. Interest in the production of 1,4:3,6-dianhydrohexitols, especially isosorbide, has been generated by potential industrial applications including the synthesis of polymers.

The use of 1,4:3,6-dianhydrohexitols in polymers, and more specifically in polycondensates, can be motivated by several features: they are rigid molecules, chiral, and non-toxic. For these reasons, there are expectations that polymers with high glass transition temperature and/or with special optical properties can be synthesized. Also the innocuous character of the molecules opens the possibility of applications in packaging or medical devices.

The industrial production of such monomers is a developing area, quickly making available this feedstock at more and more attractive prices. Moreover, interest in chemicals derived from renewable resources is increasing and becoming a decisive argument: as the carbon contained in bioplastics is not derived from fossilized biomass, but from atmospheric $CO_2$ absorbed by vegetals biomass, these plastics should alleviate the effects of climate change.

Depending on the chirality, three isomers of the 1,4:3,6-dianhydrohexitols sugar diol exist, namely isosorbide (1), isomannide (2) and isoidide (3):

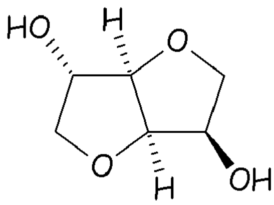
(1)

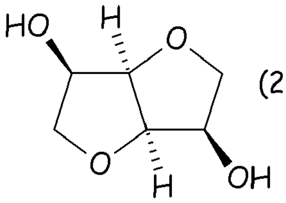
(2)

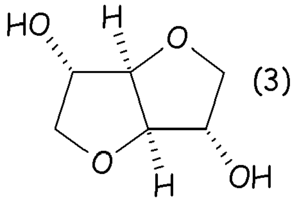
(3)

.

The 1,4:3,6-dianhydrohexitols are composed of two cis-fused tetrahydrofuran rings, nearly planar and V-shaped with a 120° angle between rings. The hydroxyl groups are situated at carbons 2 and 5 and positioned on either inside or outside the V-shaped molecule, as shown in Fig. 1. They are designated, respectively, as endo or exo. Isoidide has two exo hydroxyl groups, whereas for isomannide they are both endo, and for isosorbide there is one exo and one endo hydroxyl group. It is generally understood that the presence of the exo substituent increases the stability of the cycle to which it is attached. Also, exo and endo groups exhibit different reactivities since they are more or less accessible depending on the steric requirements of the studied reaction. The reactivity also depends on the existence of intramolecular hydrogen bonds, also shown see Fig. 1

As per the manufacture of these 1,4:3,6-dianhydrohexitols, to summarize briefly, starch extracted from biomass and in particular from corn starch, is first degraded into d-glucose (1.A) and d-mannose (2.A) by an enzymatic process. The hydrogenation of these two sugars gives d-sorbitol (1.B) and d-mannitol (2.B); sorbitol and mannitol can subsequently be dehydrated to obtain isosorbide (1) and isomannide (2), as shown herein below:

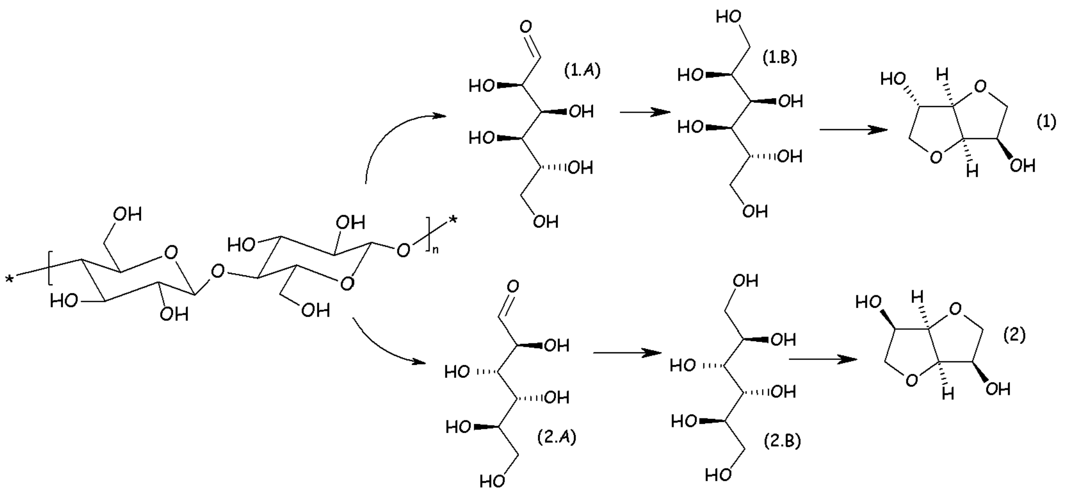

(1.A) (1.B) (1)

(2.A) (2.B) (2)

Finally, the third isomer, isoidide (3), can be produced from l-idose following a similar procedure as above sketched, but l-idose rarely exists in nature and cannot be extracted from vegetal biomass. For this reason researchers have developed different pathways to isoidide, including isomerisation of isosorbide or isomannide.

Reactivity of 1,4:3,6-dianhydrohexitols in esterification or cross-esterification reactions has been extensively exploited for incorporating such recurring units in polyesters and/or polycarbonates, including aromatic counterparts.

On the other side, reactivity in etherification reactions of 1,4:3,6-dianhydrohexitols has been often reported as more difficult. Also, no indication has been provided in the art on how incorporating 1,4:3,6-dianhydrohexitols in an aromatic polyetherketone polymer structure.

Pursuing a similar approach, US 6608167 (DUPONT DE NEMOURS AND COMPANY) 19.08.2003 discloses manufacture and reactivity of certain derivative of isosorbide, precisely bis(2-hydroxyethyl)isosorbide; in particular, this reference teaches that said derivative same can be used as valuable monomers for a wide variety of polymeric materials; possible incorporation of this monomer in polyether ketones, polyether ether sulphones and the like by known methods.

The presence of the aliphatic and flexible $C_2$ spacer, however, while enabling substantial enhancement of the hydroxyl group reactivity in a variety of reactions, thanks to the increased accessibility of the same, might substantially impair capability of providing a rigid polymer structure having high thermal stability and glass transition temperature (Tg) useful in applications that experience more aggressive environments.

On the other side, certain documents, pertaining to the technical field of polyarylene ether ketone (PAEK) polymers, disclose the modification of PAEK by means of bio-compatible materials. Thus, WO 02/00763 and WO 02/00271 pertain to the functionalization of the PAEK polymer, either via the -C(O)- unit (see '763) or via the phenyl moieties (see '271), aiming at incorporation bio-compatible moieties. Neither document mentions isosorbide as useful raw material for such bio-compatible functionalization.

In view of all the above, there is still a current shortfall in the art for polyarylene ether ketones (PAEK) comprising recurring units derived from bio-compatible and bio-based raw materials, which: (1) are readily accessible through sustainable synthetic routes; (2) retain valued properties of PAEK such as excellent thermal stability, high stiffness and strength, good toughness and good chemical resistance; and (3) can potentially provide improved performance relative to current commercial PAEK grades for applications requiring increased hydrophilicity as well as improved bio-compatibility and bio-degradability.

## Brief description of drawings

Figure 1 depicts the three isomers of the 1,4:3,6-dianhydrohexitols sugar diol, namely isosorbide (1), isomannide (2) and isoidide (3).

Figure 2 is the $^{1}$H-NMR spectrum recorded on a b-PAEK polymer made from polycondensation reaction between 4,4'-difluorobenzophenone and isosorbide.

## Summary of invention

The Applicant has now found that it is possible to advantageously manufacture polyarylene ether ketones (PAEK) of high molecular weight comprising moieties derived from incorporation of 1,4:3,6-dianhydrohexitols, said PAEK polymers advantageously fulfilling the above mentioned needs, including high Tg, thermal stability, and increased hydrophilicity.

It is thus an object of the present invention, a polyarylene ether ketone [polymer (b-PAEK)] comprising recurring units of formula ($R_b$):

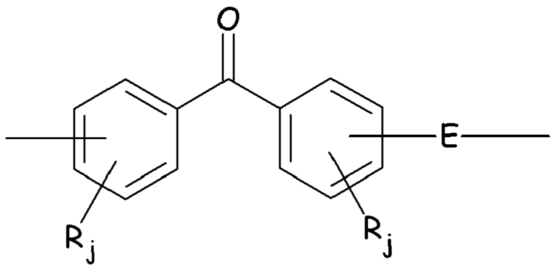

(formula $R_b$)

wherein:

- E is selected from the group consisting of:

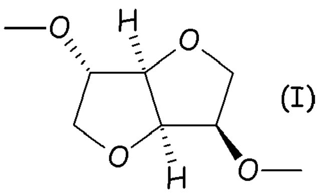

(I)

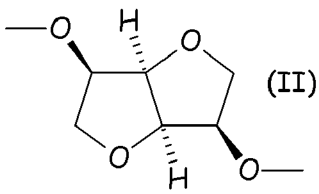

(II)

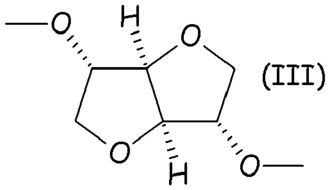

(III)

- each of R, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j is zero or is an integer from 1 to 4, said polymer (b-PAEK) having a weight average molecular weight of at least 10 000.

The high molecular weight polymer (b-PAEK) of the present invention advantageously possesses a unique combination of properties, both deriving from the incorporation of bio-based moieties from 1,4:3,6-dianhydrohexitols, like, notably, high Tg, stiffness, biocompatibility, hydrophilicity and from the high molecular weight aryl ketone moieties, ensuring thermal stability, high stiffness and strength, and good toughness.

In recurring unit ($R_b$), the respective phenylene moieties may independently have 1,2-, 1,4- or 1,3 -linkages to the other moieties different from R in the recurring unit. Preferably, said phenylene moieties have 1,3- or 1,4- linkages, more preferably they have 1,4-linkage.

Still, in recurring units ($R_b$), j is at each occurrence zero, that is to say that the phenylene moieties have no other substituents than those enabling linkage in the main chain of the polymer.

Most preferably, recurring units ($R_b$) are selected from the group consisting of:

units of formula ($R_b$-I):

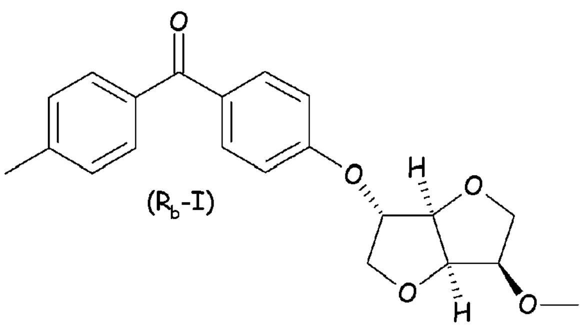

($R_b$-I)

units of formula ($R_b$-2):

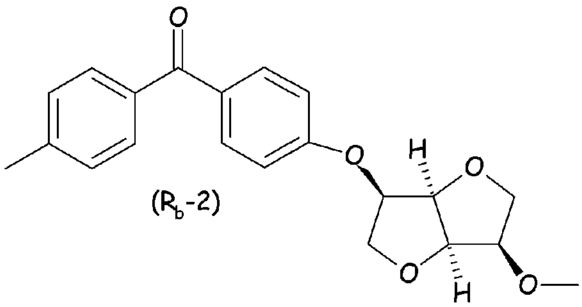

$(R_b$-2)

units of formula $(R_b$-3):

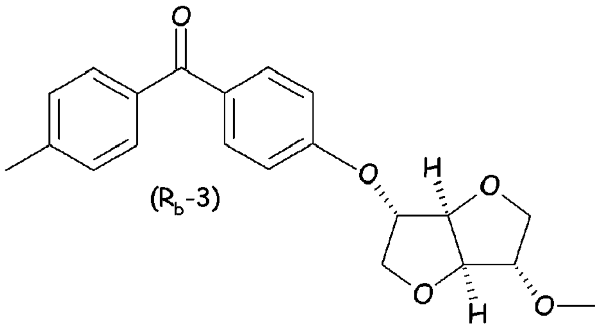

$(R_b$-3)

The above recurring units of preferred embodiments $(R_b$-I), $(R_b$-2), $(R_b$-3) can be each present alone or in admixture. Preferred are polymer (b-PAEK) comprising recurring units $(R_b)$ of formula $(R_b$-I), optionally in combination with recurring units of formula $(R_b$-2) and $(R_b$-3).

The polymer (b-PAEK) may comprise in addition to recurring units of formula $(R_b)$ as above detailed, recurring units different from $R_b$: in other words, in addition to units derived from polycondensation of the dihaloketocompound of formula:

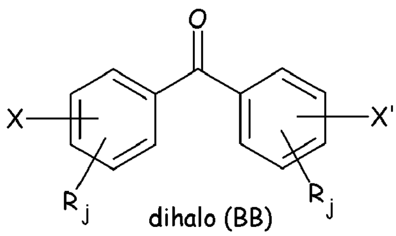

dihalo (BB)

wherein X and X', equal to or different from each other, are halogens, and R and j have the meaning as above detailed, and of a 1,4:3,6-dianhydrohexitols, the polymer (b-PAEK) may notably comprise recurring units derived from the polycondensation of one or more diols different from the 1,4:3,6-dianhydrohexitols and/or from the polycondensation of one or more dihaloaryl compound different from above mentioned dihaloketocompound of formula dihalo (BB).

According to certain embodiments, the polymer (b-PAEK) can thus comprise, in addition to recurring units $(R_b)$, as above detailed, recurring units $(R_a)$ comprising a Ar-C(O)-Ar' group, with Ar and Ar', equal to or different from each other, being aromatic groups, said recurring units $(R_a)$ being generally selected from the group consisting of formulae (J-A) to (J-O), herein below:

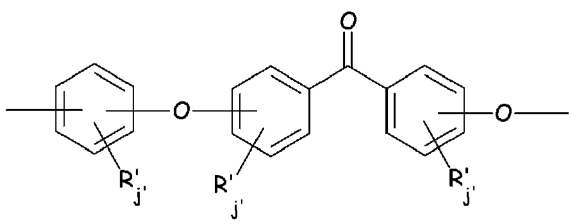

(J-A)

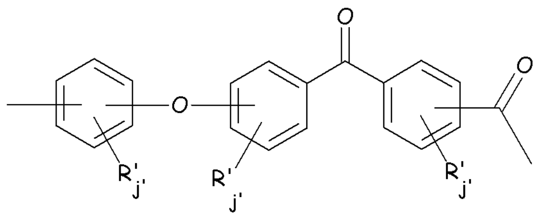

(J-B)

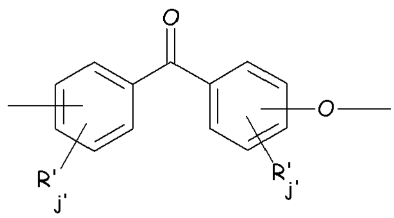

(J-C)

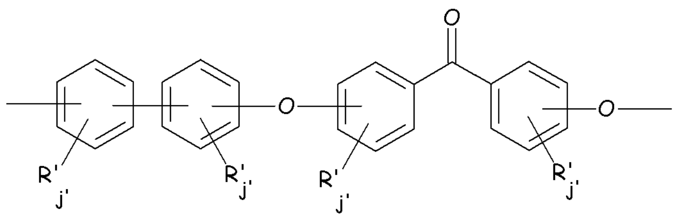

(J-D)

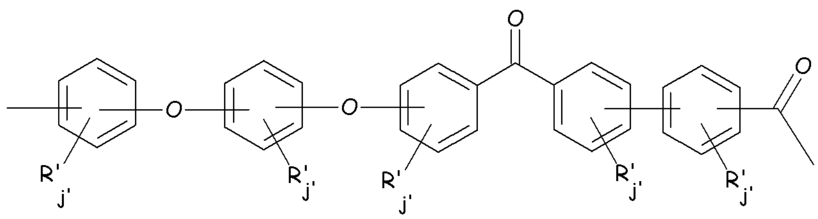

(J-E)

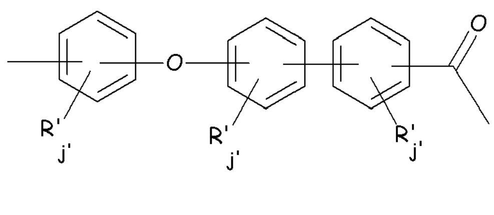

(J-F)

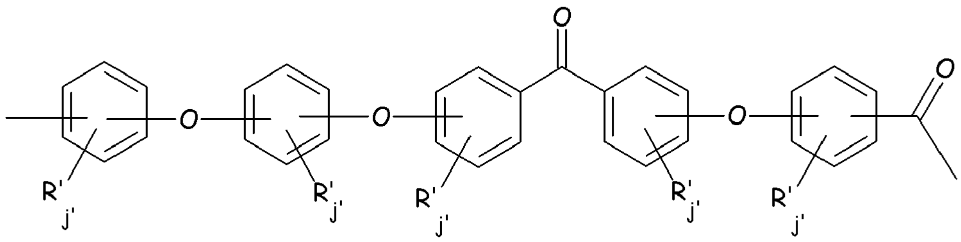

(J-G)

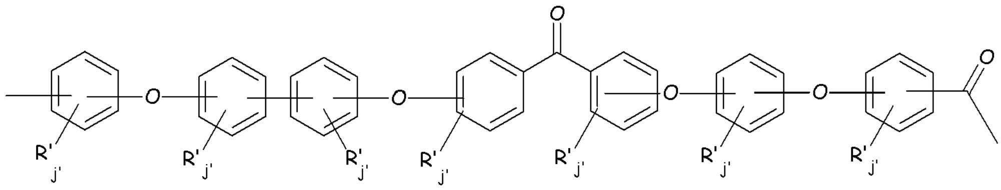

(J-H)

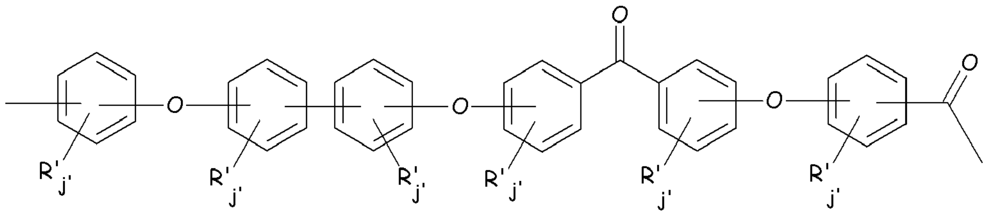

(J-I)

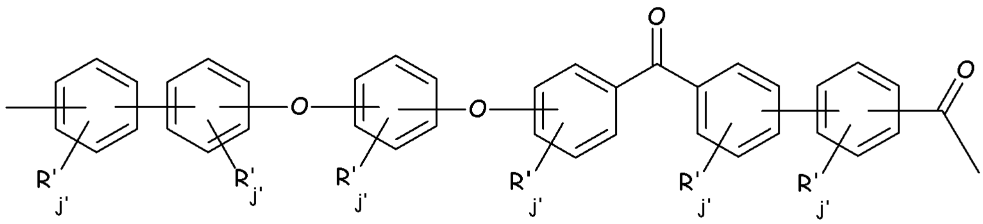

(J-J)

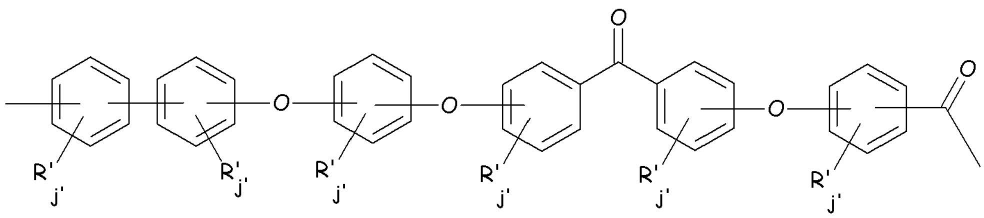

(J-K)

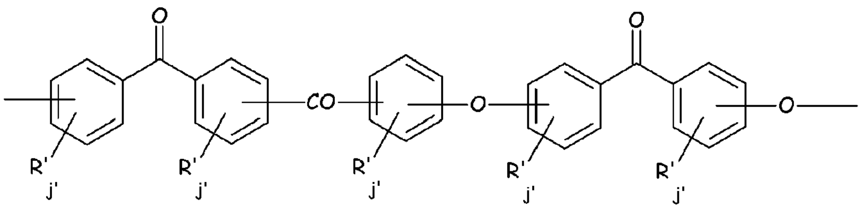

(J-L)

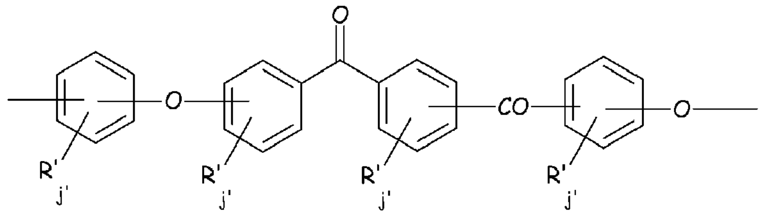
(J-M)

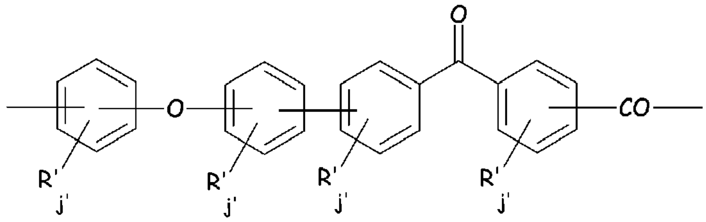
(J-N)

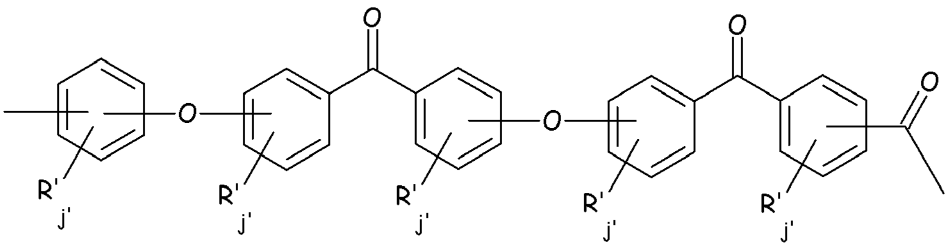
(J-O)

wherein:

- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j' is zero or is an integer from 0 to 4.

In recurring unit ($R_a$), the respective phenylene moieties may independently have 1,2-, 1,4- or 1,3 -linkages to the other moieties different from R' in the recurring unit. Preferably, said phenylene moieties have 1,3- or 1,4- linkages, more preferably they have 1,4-linkage.

Still, in recurring units ($R_a$), j' is at each occurrence zero, that is to say that the phenylene moieties have no other substituents than those enabling linkage in the main chain of the polymer.

Preferred recurring units ($R_a$) are thus selected from those of formulae (J'-A) to (J'-O) herein below:

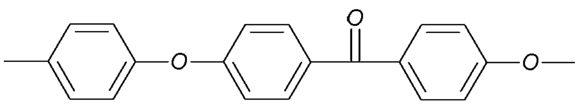
(J'-A)

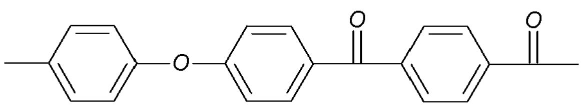
(J'-B)

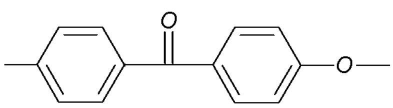
(J'-C)

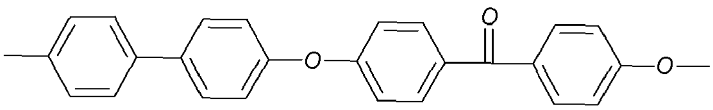 (J'-D)

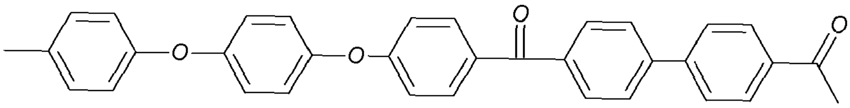 (J'-E)

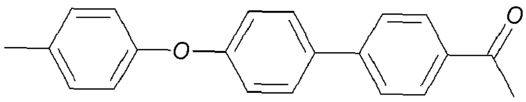 (J'-F)

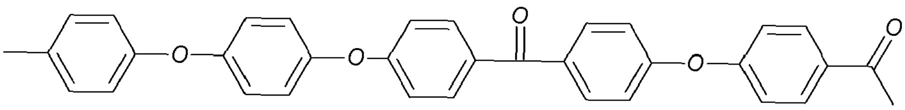 (J'-G)

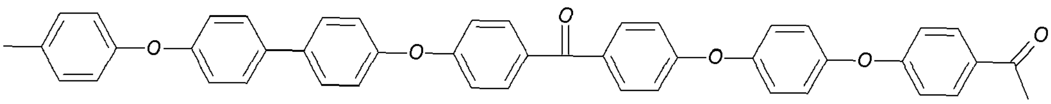

(J'-H)

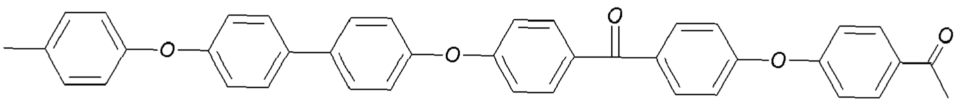 (J'-I)

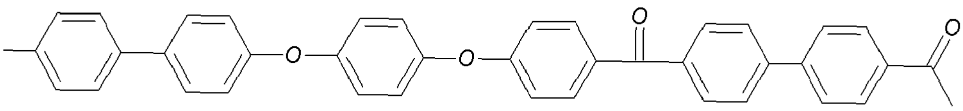 (J'-J)

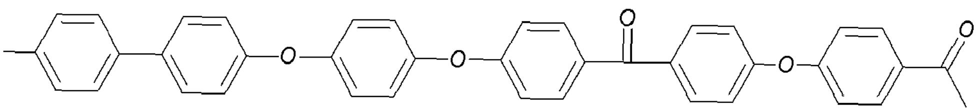 (J'-K)

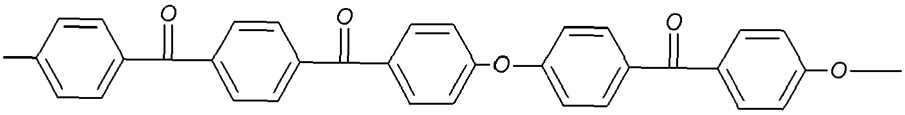 (J'-L)

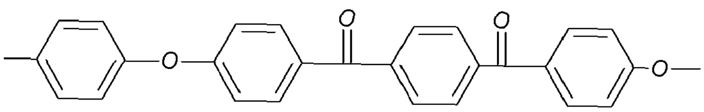 (J'-M)

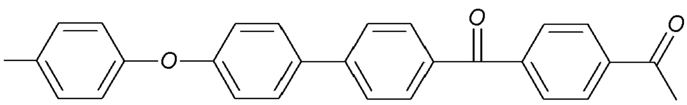 (J'-N)

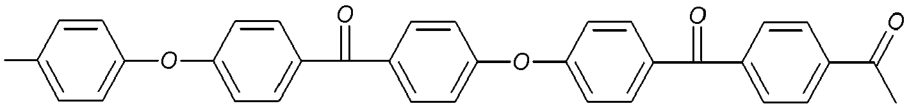 (J'-O)

According to certain embodiments, the polymer (b-PAEK) can comprise, in addition to recurring units ($R_b$), as above detailed, recurring units ($R_c$) comprising a $Ar-SO_2-Ar'$ group, with Ar and Ar', equal to or different from each other, being aromatic groups, said recurring units ($R_c$) generally complying with either of formulae:

$$: -Ar^1-(T'-Ar^2)_n-O-Ar^3-SO_2-[Ar^4-(T-Ar^2)_n-SO_2]_m-Ar^5-O- \quad (S1)$$

$$: -E'-O-Ar^3-SO_2-(Ar^4-SO_2)_m-Ar^5-O- \quad (S2)$$

wherein:

- $Ar^1$, $Ar^2$, $Ar^3$, $Ar^4$, and $Ar^5$, equal to or different from each other and at each occurrence, are independently a aromatic mono- or polynuclear group;
- T and T', equal to or different from each other and at each occurrence, is independently a bond or a divalent group optionally comprising one or more than one heteroatom; preferably T' is selected from the group consisting of a bond, $-CH_2-$, -C(O)-, $-C(CH_3)_2-$, $-C(CF_3)_2-$, $-C(=CCl_2)-$, $-C(CH_3)(CH_2CH_2COOH)-$, $-SO_2-$, and a group of formula:

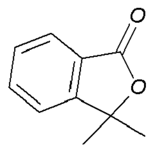 , and

preferably T is selected from the group consisting of a bond, $-CH_2-$, -C(O)-, $-C(CH_3)_2-$, $-C(CF_3)_2-$, $-C(=CCl_2)-$, $-C(CH_3)(CH_2CH_2COOH)-$, and a group of formula:

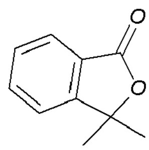 , and

- n and m, equal to or different from each other, are independently zero or an integer of 1 to 5;
- E' is a group selected from the group consisting of formulae (E'-I), (E'-II) and (E'-III):

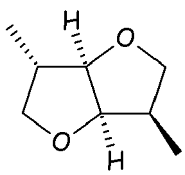 (E'-I) 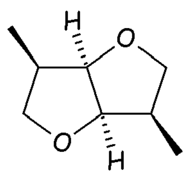 (E'-II) 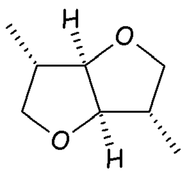 (E'-III) .

Recurring units ($R_c$) can be notably selected from the group consisting of those of formulae (S-A) to (S-F) herein below:

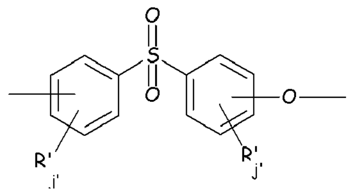
(S-A)

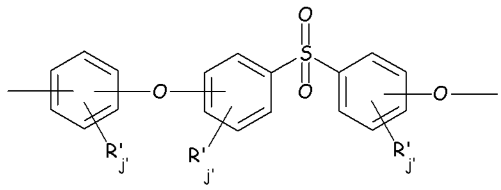
(S-B)

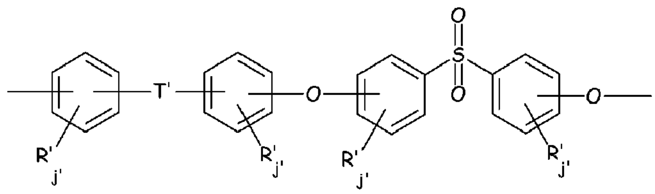
(S-C)

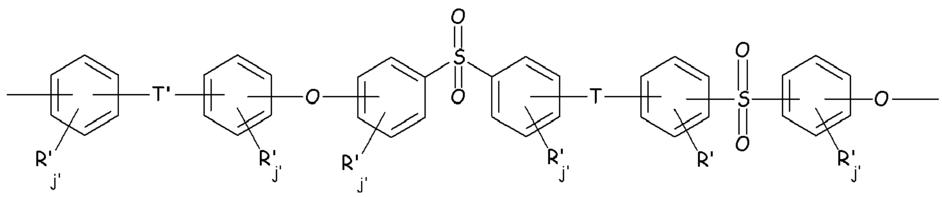
(S-D)

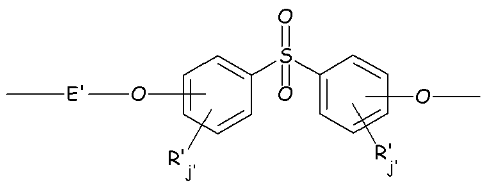
(S-E)

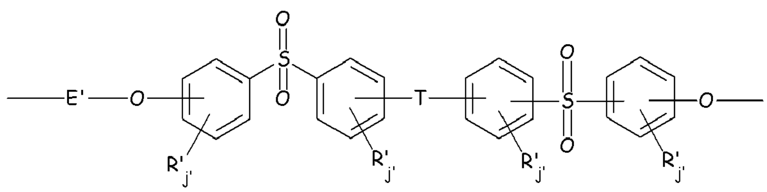
(S-F)

wherein:

- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j' is zero or is an integer from 0 to 4;
- T and T', equal to or different from each other are a bond or a divalent group optionally comprising one or more than one heteroatom; preferably T' is selected from the group consisting of a bond, $-CH_2-$, $-C(O)-$, $-C(CH_3)_2$
- , $-C(CF_3)_2-$, $-C(=CCl_2)-$, $-C(CH_3)(CH_2CH_2COOH)-$, $-SO_2-$, and a group of formula:

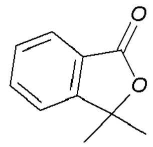

, and

preferably T is selected from the group consisting of a bond, $-CH_2-$, -C(O)-, $-C(CH_3)_2-$, $-C(CF_3)_2-$, $-C(=CCl_2)-$, -C $(CH_3)(CH_2CH_2COOH)-$, and a group of formula:

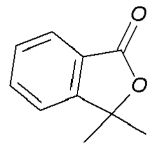

, and

- E' is a group selected from the group consisting of formulae (E'-I), (E'-II) and (E'-III):

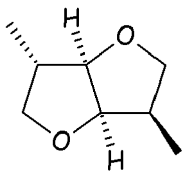

(E'-I)

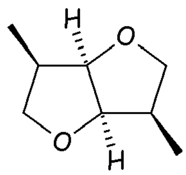

(E'-II)

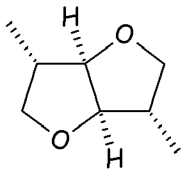

(E'-III) .

The polymer (b-PAEK) comprises recurring units of formula $R_b$ as above detailed in an amount of at least 10 % moles, preferably 15 % moles, more preferably 20 % moles, even more preferably at least 50 % moles, with respect to all recurring units of polymer (b-PAEK).

According to certain preferred embodiments, more than 70, and more preferably more than 85 % moles of the recurring units of the polymer (b-PAEK) are recurring units ($R_b$), as above detailed, the complement to 100 % moles being generally recurring units ($R_a$), as above detailed, and/or recurring units ($R_c$), as above detailed.

Still more preferably, essentially all the recurring units of the polymer (b-PAEK) are recurring units ($R_b$). Most preferably, all the recurring units of the polymer ($_b$-PAEK) are recurring units ($R_b$). Excellent results were obtained when the polymer (b-PAEK) was a polymer of which all the recurring units are recurring units ($R_b$), as above detailed.

As said, the polymer (b-PAEK) of the invention is a high molecular weight polymer, that is to say a polymer having a weight averaged molecular weight of at least 10 000, preferably at least 12 000.

This high molecular weight of polymer (b-PAEK) enables attainment of mechanical and physical properties similar to commercially available polyarylene ether ketones, including excellent thermal stability, high stiffness and strength, and good toughness. Polymers comprising recurring units ($R_b$), as above mentioned, but having molecular weight of less than 10 000, have no adequate molecular properties, and are thus of little if no utility as replacement of PAEK materials not made from bio-based feed-stocks.

To the aim of providing polymers particularly suitable for being used for manufacturing membranes, in particular filtration membranes, the polymer (b-PAEK) of the invention has advantageously a weight averaged molecular weight of at least 25 000, preferably of at least 45 000. Polymers (b-PAEK) having such molecular weight have been found to provide particularly good results when used as membranes for bio-processing and medical filtration, food and beverage processing, hemodialysis and water treatment.

The weight average molecular weight ($M_w$) and the number average molecular weight ($M_n$) can be estimated by gel-permeation chromatography (GPC) calibrated with polystyrene standards.

The weight average molecular weight ($M_w$) is: $M_w = \frac{\sum M_i^2 \cdot N_i}{\sum M_i \cdot N_i}$. The number average molecular weight ($M_n$) : $M_n = \frac{\sum M_i \cdot N_i}{\sum N_i}$, and the polydispersity index (PDI) is hereby expressed as the ratio of weight average

molecular weight ($M_w$) to number average molecular weight ($M_n$).

The polymer (b-PAEK) of the present invention generally has a polydispersity index of less than 2.5, preferably of less than 2.4, more preferably of less than 2.2. This relatively narrow molecular weight distribution is representative of an ensemble of molecular chains with similar molecular weights and substantially free from oligomeric fractions, which might have a detrimental effect on polymer properties.

In other words, the Applicant has succeeded in providing a polymer (b-PAEK) wherein the moieties of 1,4:3,6-dianhydrohexitols have been successfully incorporated in the chain with no detrimental effect in polymerization reactivity, so that an excellent material, with fully controlled structure is advantageously obtained.

These results enable achievement of polymers (b-PAEK) advantageously having extremely low levels of insolubles and extractibles, but still possessing increased bio-compatibility due to the 1,4:3,6-dianhydrohexitols units, which have been found to be particularly useful for manufacturing membranes, in particularly those intended for contact with body fluids and/or food and beverages.

The polymer (b-PAEK) of the present invention advantageously possesses a glass transition temperature of at least 140°C, preferably 160°C, more preferably at least 165°C. Such high glass transition temperatures are advantageous for extending temperatures range of use of the polymer (PAEK-b).

Glass transition temperature (Tg) is generally determined by DSC, according to ASTM D3418.

The polymer (b-PAEK) of the present invention advantageously possesses a peak degradation temperature of at least 300°C, preferably at least 350°C, more preferably at least 400°C.

Peak degradation temperature is generally determined by TGA, using procedure described in ASTM E1131.

Still another object of the present invention is a process for manufacturing the polymer (b-PAEK) as above detailed.

The process of the invention advantageously comprises reacting in a solvent mixture comprising a polar aprotic solvent:

- at least one 1,4:3,6-dianhydrohexitol [diol (AA)] selected from the group consisting of isosorbide (1), isomannide (2) and isoidide (3):

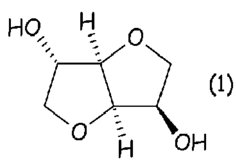 (1) 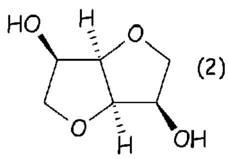 (2) 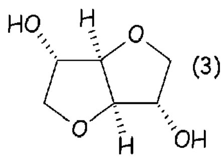 (3)

- at least one dihalobenzoid compound [dihalo (BB)] of formula:

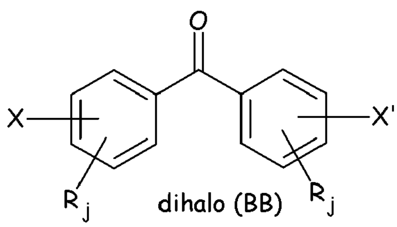

dihalo (BB)

wherein:

- each of R, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j is zero or is an integer from 1 to 4;
- X and X', equal to or different from each other, are independently a halogen atom, preferably Cl or F, more preferably F; said diol (AA) and dihalo (BB) being reacted in substantially equimolecular amount,

in the presence of an alkali metal carbonate.

Unequal reactivity of hydroxyl groups of 1,4:3,6-dianhydrohexitol may be used to generate in a first reaction step of the process of the invention a bio-hydroxyl-halo compound (AB); typical examples of these bio-hydroxyl-halo compounds (AB) are those obtained by partial reaction of the isosorbide and/or the isoidide, typically having formulae:

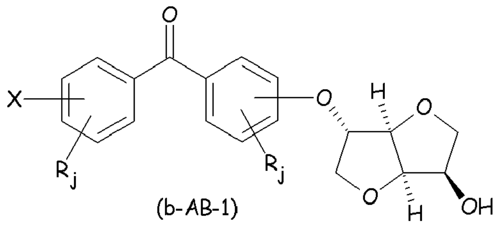

(b-AB-1)

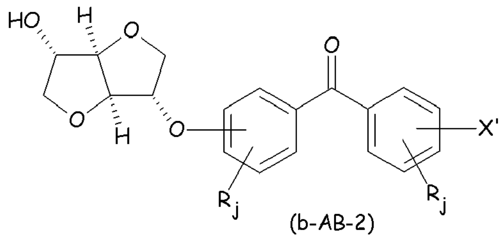

(b-AB-2)

wherein:

- each of R, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j is zero or is an integer from 1 to 4;
- X and X', equal to or different from each other, are independently a halogen atom, preferably Cl or F, more preferably F.

The process may comprise additionally reacting in said solvent mixture at least one of:

- dihydroxyl compound [diol (A'A')] different from diol (AA), as above detailed;
- dihaloaryl compound [dihalo (B'B')] different from dihalo (BB), as above detailed; and
- a hydroxyl-halo compound [hydro-halo (A'B')], when the process is intended to manufacture polymer (b-PAEK) comprising recurring units different from ($R_b$), being understood that the overall amount of halo-groups and hydroxyl-groups is then substantially equimolecular.

The expression 'substantially equimolecular' used with reference to the ratio between diol (AA) and dihalo (BB) and/or with reference to any other combination of optional bio-hydroxyl-halo (AB), diol (A'A'), dihalo (B'B') and hydroxyl-halo (A'B') compounds, as above detailed, is to be understood that the molar ratio between the overall amount of hydroxyl groups and overall amount of halo groups is of 0.95 to 1.05, preferably of 0.99 to 1.01, more preferably of 0.995 to 1.005.

Preferred dihalobenzoid compounds [dihalo (BB)] are 4,4'-difluorobenzophenone, 4,4'-dichlorobenzophenone and 4-chloro-4'-fluorobenzophenone, with 4,4'-difluorobenzophenone being particularly preferred.

Among dihaloaryl compounds [dihalo(B'B')] different from dihalo (BB) mention can be notably made of compounds of formula (S):

$X\text{-}Ar^3\text{-}SO_2\text{-}[Ar^4\text{-}(T\text{-}Ar^2)_n\text{-}SO_2]_m\text{-}Ar^5\text{-}X$ formula (S) wherein:

- n and m, equal to or different from each other, are independently zero or an integer of 1 to 5;
- X is an halogen selected from F, Cl, Br, I ;
- each of $Ar^2$, $Ar^3$, $Ar^4$, $Ar^5$ equal to or different from each other and at each occurrence, is an aromatic moiety of the formula :

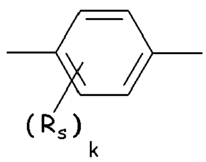

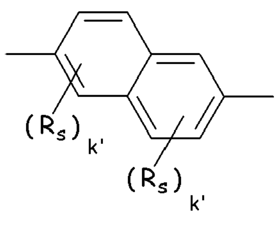

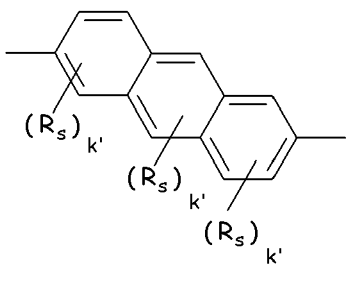

wherein:

- each $R_s$ is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- k is zero or an integer of 1 to 4; k' is zero or an integer of 1 to 3;
- T is a bond or a divalent group optionally comprising one or more than one heteroatom; preferably T is selected

from the group consisting of a bond, $-CH_2-$, $-C(O)-$, $-C(CH_3)_2-$, $-C(CF_3)_2-$, $-C(=CCl_2)-$, $-C(CH_3)(CH_2CH_2COOH)-$, and a group of formula:

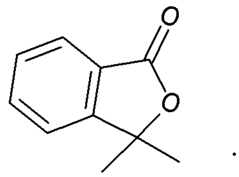

Among dihaloaryl compounds [dihalo(B'B')] different from dihalo (BB) suitable for being used in the process of the present invention, mention may notably made of the following molecules :

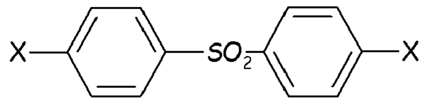

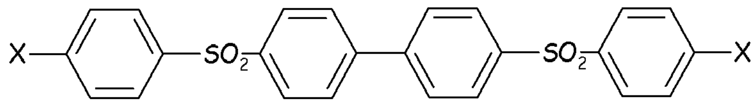

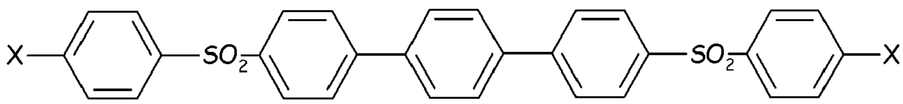

Among dihydroxyl compounds [diols (A'A')] different from diol (AA), as above detailed, mention can be of compounds of formula (O):

$HO-Ar^1-(T'-Ar^2)_n-OH$ formula (O)
wherein:

- n is zero or an integer of 1 to 5;
- each of $Ar^1$ and $Ar^2$, equal to or different from each other and at each occurrence, is an aromatic moiety of the formula :

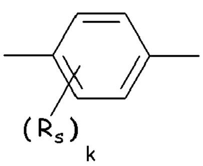
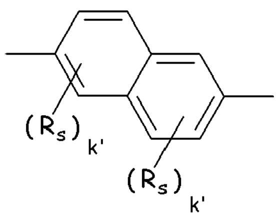
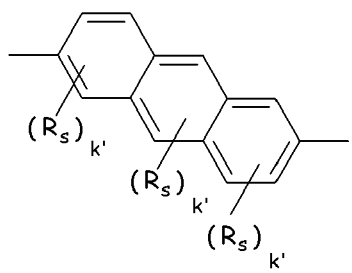

wherein:

- each $R_s$ is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- k is zero or an integer of 1 to 4; k' is zero or an integer of 1 to 3;
- T' is a bond or a divalent group optionally comprising one or more than one heteroatom; preferably T is selected from the group consisting of a bond, $-SO_2-$, $-CH_2-$, $-C(O)-$, $-C(CH_3)_2-$, $-C(CF_3)_2-$, $-C(=CCl_2)-$, $-C(CH_3)(CH_2CH_2COOH)-$, and a group of formula:

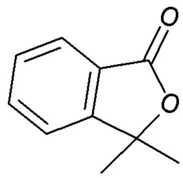

.

Among preferred dihydroxyl compounds [diols (A'A')] different from diol (AA), as above detailed, suitable for being used in the process of the present invention, mention may be notably made of the following molecules:

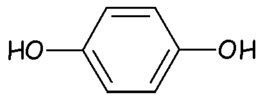

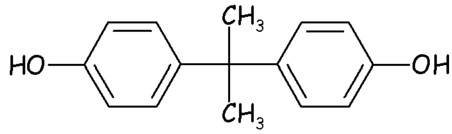

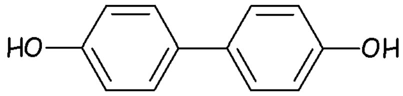

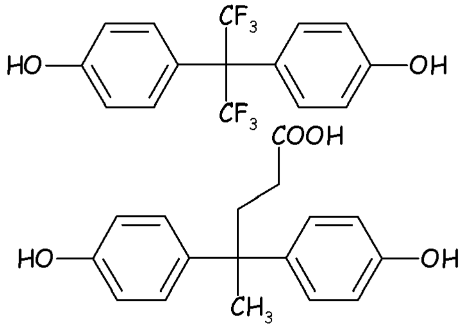

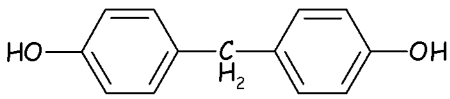

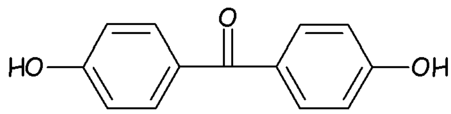

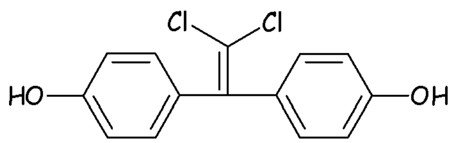

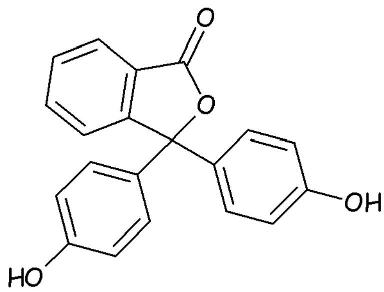

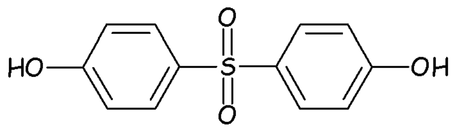

.

Among hydroxyl-halo compound [hydro-halo (A'B')] different from bio-hydroxyl-halo compound (AB), as above detailed, mention can be of compounds of any of formulae:

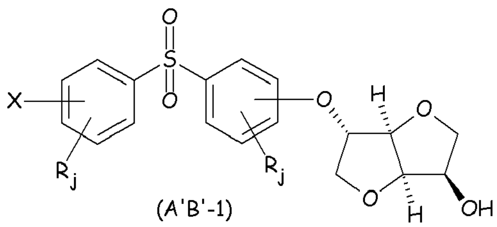

(A'B'-1)

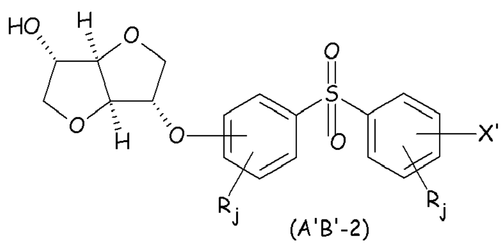

(A'B'-2)

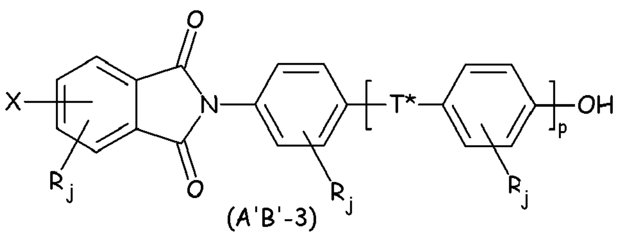

(A'B'-3)

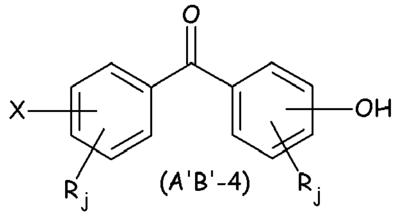

(A'B'-4)

- each of R, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- T*, equal to or different from each other at each occurrence, is independently a bond or a divalent group optionally comprising one or more than one heteroatom; preferably T* is selected from the group consisting of a bond, $-SO_2-$, $-CH_2-$, -C(O)-, $-C(CH_3)_2-$, $-C(CF_3)_2-$, $-C(=CCl_2)-$, $-C(CH_3)(CH_2CH_2COOH)-$;
- j is zero or is an integer from 1 to 4;
- X and X', equal to or different from each other, are independently a halogen atom, preferably Cl or F, more preferably F.

The alkali metal carbonate is preferably sodium carbonate, potassium carbonate, rubidium carbonate and cesium carbonate. Sodium carbonate and especially potassium carbonate are preferred. Mixtures of more than one carbonates can be used, for example, a mixture of sodium carbonate or bicarbonate and a second alkali metal carbonate or bicarbonate having a higher atomic number than that of sodium.

The amount of said alkali metal carbonate used, when expressed by the ratio of the equivalents of alkali metal (M) per equivalent of hydroxyl group (OH) [eq. (M)/eq. (OH)] ranges from about 1.0 to about 3.0, preferably from about 1.1 to about 2.5, and more preferably from about 1.5 to about 2.0, being understood that above mentioned hydroxyl group equivalents are comprehensive of those of the diol (AA), and, if present, of bio-hydroxyl-halo compound (AB), of diol (A'A') and of hydro-halo (A'B').

The use of an alkali metal carbonate having an average particle size of less than about 100 μm, preferably of less than about 50 μm is particularly advantageous. The use of an alkali metal carbonate having such a particle size permits the synthesis of the polymers to be carried out at a relatively lower reaction temperature with faster reaction.

The diol (AA) and dihalo (BB) and all other optional components are dissolved or dispersed in a solvent mixture comprising a polar aprotic solvent. If desired, an additional solvent can be used together with the polar aprotic solvent which forms an azeotrope with water, whereby water formed as a by-product during the polymerization may be removed by continuous azeotropic distillation throughout the polymerization.

The by-product water and carbon dioxide possibly formed during the polymerization can alternatively be removed using a controlled stream of an inter gas such as nitrogen or argon over the reaction mixture in addition to or in the absence of an azeotrope-forming solvent as described above.

For the purpose of the present invention, the term "additional solvent" is understood to denote a solvent different from the polar aprotic solvent and the reactants and the products of said reaction.

As polar aprotic solvents, sulphur containing solvents known and generically described in the art as dialkyl sulfoxides and dialkylsulfones wherein the alkyl groups may contain from 1 to 8 carbon atoms, including cyclic alkyliden analogs thereof, can be mentioned. Specifically, among the sulphur-containing solvents that may be suitable for the purposes of this invention are dimethylsulfoxide, dimethylsulfone, diphenylsulfone, diethylsulfoxide, diethylsulfone, diisopropylsulfone, tetrahydrothiophene-1, 1-dioxide (commonly called tetramethylene sulfone or sulfolane) and tetrahydrothiophene-1-monoxide and mixtures thereof. Nitrogen-containing polar aprotic solvents, including dimethylacetamide, dimethylformamide and N-methyl pyrrolidone (i.e., NMP) and the like have been disclosed in the art for use in these processes, and may also be found useful in the practice of this invention.

The additional solvent that forms an azeotrope with water will generally be selected to be inert with respect to the monomer components and polar aprotic solvent. Suitable azeotrope-forming solvents for use in such polymerization processes include aromatic hydrocarbons such as benzene, toluene, xylene, ethylbenzene, chlorobenzene and the like.

The azeotrope-forming solvent and polar aprotic solvent are typically employed in a weight ratio of from about 1 : 10 to about 1 : 1, preferably from about 1 : 5 to about 1 : 3.

Generally, after an initial heat up period, the temperature of the reaction mixture will be maintained in a range of advantageously from 80-240°C, preferably from 120 to 230°C for about 0. 5 to 3 hours.

The polymer (b-PAEK) of the present invention can notably be used for the manufacture of membranes, films and sheets, and three-dimensional moulded parts.

As per the processing, the polymer (b-PAEK) can be advantageously processed for yielding all above mentioned articles by melt processing (including injection moulding, extrusion moulding, compression moulding), but also by solution

processing, because of the solubility of the polymer (b-PAEK).

Non limitative examples of shaped articles which can be manufactured from polymer (b-PAEK) using different processing technologies are generally selected from the group consisting of melt processed films, solution processed films (porous and non porous films, including solution casted membranes, and membranes from solution spinning), melt process monofilaments and fibers, solution processed monofilaments, hollow fibers and solid fibers, and injection and compression molded objects.

Among membranes, the polymer (b-PAEK) of the invention is particularly suitable for manufacturing membranes intended for contact with aqueous media, including body fluids; thus, shaped articles which can be manufactured from the polymer (b-PAEK) as above detailed are advantageously membranes for bioprocessing and medical filtrations, including hemodialysis membranes, membranes for food and beverage processing, membranes for waste water treatment and membranes for industrial process separations involving aqueous media.

From an architectural perspective, membranes manufactured from the polymer (b-PAEK) as above detailed may be provided under the form of flat structures (e.g. films or sheets), corrugated structures (such as corrugated sheets), tubular structures, or hollow fibers; as per the pore size is concerned, full range of membranes (non porous and porous, including for microfiltration, ultrafiltration, nanofiltration, and reverse osmosis) can be advantageously manufactured from the polymer (b-PAEK) of the invention; pore distribution can be isotropic or anisotropic.

Shaped articles manufactured from the polymer (b-PAEK) can be, as above mentioned, under the form of films and sheets. These shaped articles are particularly useful as specialized optical films or sheets, and/or suitable for packaging.

Further, shaped articles manufactured from the polymer (b-PAEK) of the invention can be three-dimensional moulded parts, in particular transparent or coloured parts.

Among fields of use wherein such injection moulded parts can be used, mention can be made of healthcare field, in particular medical and dental applications, wherein shaped articles made from the (b-PAEK) of the invention can advantageously be used for replacing metal, glass and other traditional materials in single-use and reusable instruments and devices.

A further object of the invention are shaped articles manufactured from the polymer (b-PAEK) as above detailed.

The invention will now be described with reference to the following examples, whose purpose is merely illustrative and not intended to limit the scope thereof.

**Example** 1

Isosorbide (22.55 g, 0.1543 moles), 4, 4'- difluorobenzophenone (34.11 g, 0.1563 moles), potassium carbonate (43.94 g, 0.3179 moles), and 88.9 g sulfolane (target 36 wt% polymer solution) were charged to a 500 mL four-neck flask equipped with a mechanical stirrer, thermocouple, nitrogen inlet/outlet, Barrett trap, and condenser. The reaction mixture was heated to 210°C using a temperature-controlled oil bath over one hour and kept at this temperature for three hours under a controlled nitrogen purge to remove water and carbon dioxide. After the reaction mixture achieved an observable high torque on the agitator display, the reaction mixture was diluted with additional sulfolane, and the temperature lowered to 170°C. Next, 15 g methyl chloride gas was bubbled in to the reaction mixture over 30 minutes. After further cooling to about 120°C, the reaction mixture was filtered under pressure through a glass fiber filter (0.2 mm) to remove by-product salts and excess potassium carbonate to yield a clear ~15 wt% polymer solution. The polymer solution was then poured in to a Waring blender containing one litre methanol to precipitate a white polymer powder. The polymer powder was isolated by filtration, washed twice with hot de-ionized water and methanol, and then dried at 100°C under reduced pressure until constant weight. The isolated yield of polymer was 89%. The polymer was found to readily dissolve in NMP, DMAc, DMF, and chloroform. The $^1$H-NMR spectrum of the b-PAEK polymer in $CDCl_3$ is shown in Figure 2. The ratio of the integrated peaks due to the aromatic and aliphatic protons indicated the expected equimolar incorporation of the aromatic groups from the benzophenone and the aliphatic rings from the isosorbide. The polymer powder was further analyzed by GPC, TGA and DSC to determine the molecular weight, PDI, and thermal properties (results are summarized in Table 1).

**Example 2**

Same procedure as Example 1 was followed except that NMP was used as the aprotic solvent and the reaction temperature maintained at 180°C for 48 hours. Isolated polymer yield was 87%. The molecular weight and thermal properties are given in Table 1.

**Example 3**

Same as Example 1 except that an equimolar amount of 4,4'-difluorosulfone and 4, 4'- difluorobenzophenone was polymerized with isosorbide to form a PAEK copolymer. Isolated yield was 85%. The molecular weight and thermal properties are reported in Table 1. The single $T_g$ observed in the DSC analysis indicated a mostly random distribution of monomers in the polymer structure.

**Example 4**

Same as Example 1 except that equimolar amounts of bisphenol S and isosorbide were polymerized with 4,4'-difluorobenzophenone to form a PAEK copolymer. The molecular weight and thermal properties are given in Table

1. The single Tg implied a mostly random distribution of monomers in the polymer structure.

**Table 1. Molecular weight and thermal properties for Examples 1-4.**

Table 1

| Example # | GPC | | DSC | TGA |
|---|---|---|---|---|
| | Mw, g/mol | PDI | Tg,oC | Peak Degradation oC |
| 1 | 58346 | 2.08 | 167.7 | 424 |
| 2 | 12731 | 2.02 | 147.6 | 437 |
| 3 | 89630 | 1.88 | 188.8 | 447 |
| 4 | 57955 | 2.17 | 166.4 | 419 |

**Example 5**

A portion of the polymer from Example 1 was dissolved in excess methylene chloride and the solution poured in to a small aluminum pan. The solvent was slowly evaporated and the resulting clear film dried overnight under vacuum at 50 °C. The film, which had a thickness of around 120 μm, was flexible and creasable indicating good mechanical properties.

Three small strips were cut from the film, dried to constant weight, and then submerged in DI water. After soaking for one day at 23 °C, the films were padded dry of surface water and reweighed. The average amount of water absorbed was1.89 +/- 0.04 wt%. Oven drying the hydrated film samples returned the original pre-soak dry weights to within 0.1 %. As a comparison, commercial PAEK, such as Ketaspire® supplied by Solvay, not comprising recurring units of type $R_b$ as above detailed, absorbs only 0.1 wt% water after one day of soaking in water at 23°C (ASTM 570). Thus, the b-PAEK from Example 1 was found to be more hydrophilic than standard PAEK due to the incorporation of isosorbide in the polymer structure. This increased hydrophilicity is particularly advantageous in filtration applications, e.g. for reducing overpressure required for filtrating aqueous media.

## Claims

**1.** A polyarylene ether ketone [polymer (b-PAEK)] comprising recurring units of formula ($R_b$):

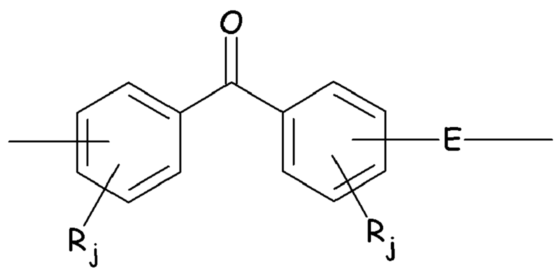

(formula $R_b$)
wherein:

- E is selected from the group consisting of:

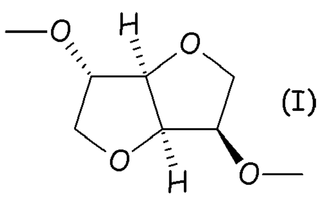
(I)
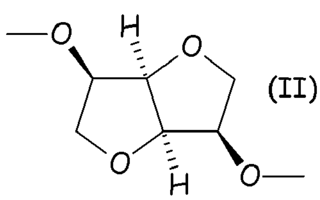
(II)
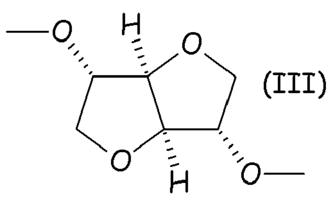
(III)

- each of R, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j is zero or is an integer from 1 to 4,

said polymer (b-PAEK) having a weight average molecular weight of at least 10 000.

**2.** The polymer (b-PAEK) of claim 1, wherein said recurring units ($R_b$) are selected from the group consisting of:

units of formula ($R_b$-I):

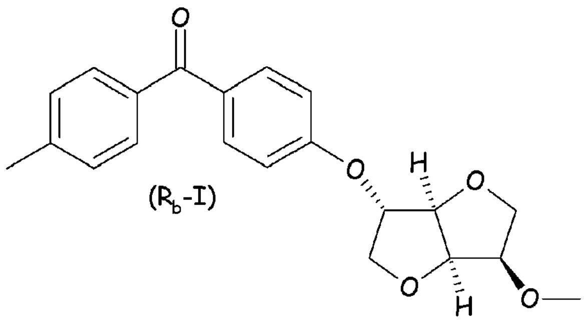

($R_b$-I)

units of formula ($R_b$-2):

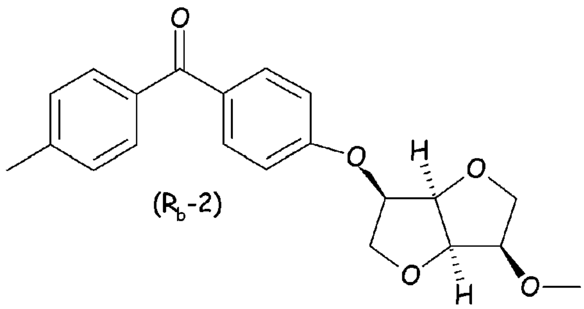

($R_b$-2)

units of formula ($R_b$-3):

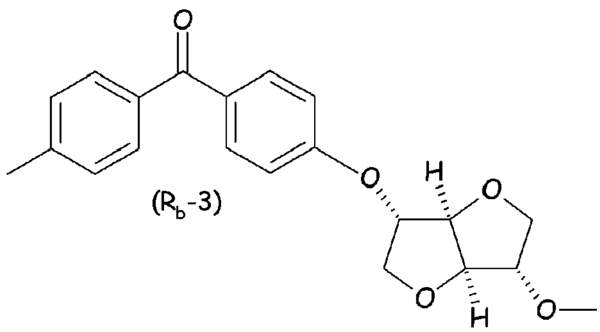

($R_b$-3)

**3.** The polymer (b-PAEK) of claim 1, additionally comprising recurring units different from units (Rb), said additional recurring units being derived from the polycondensation of one or more diols different from the 1,4:3,6-dianhydrohexitols and/or from the polycondensation of one or more dihaloaryl compound different from dihaloketocompound of formula:

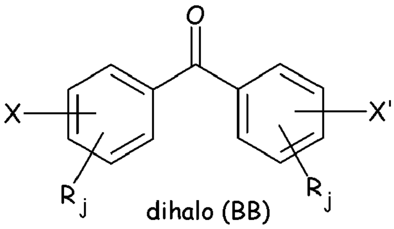

dihalo (BB)

wherein X and X', equal to or different from each other, are halogens, and R and j have the meaning as detailed in claim 1.

**4.** The polymer (b-PAEK) of claim 3, wherein said additional recurring units are recurring units ($R_a$) comprising a Ar-C(O)-Ar' group, with Ar and Ar', equal to or different from each other, being aromatic groups, said recurring units ($R_a$) being generally selected from the group consisting of formulae (J-A) to (J-O), herein below:

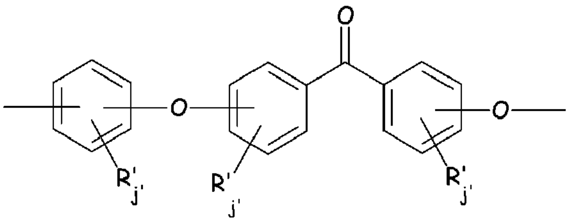

(J-A)

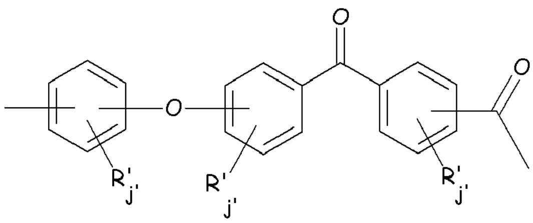

(J-B)

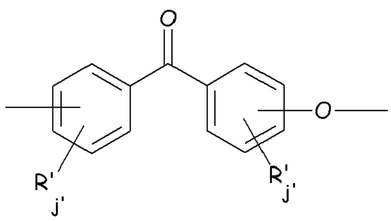

(J-C)

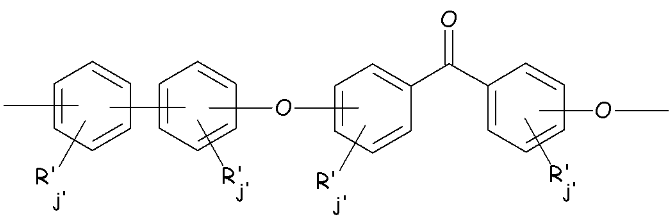

(J-D)

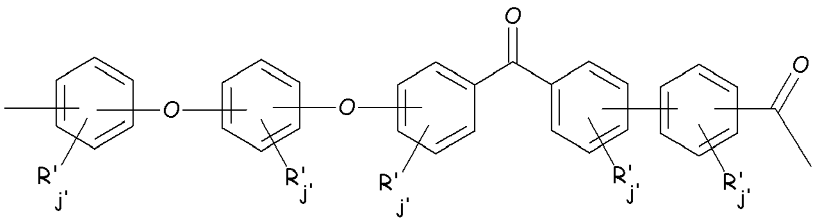

(J-E)

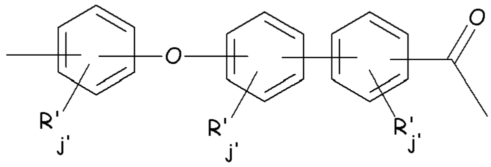

(J-F)

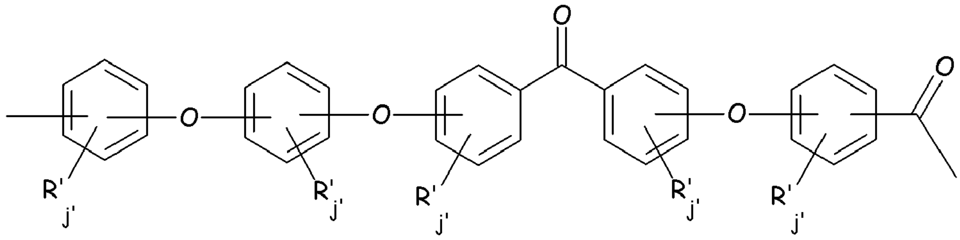

(J-G)

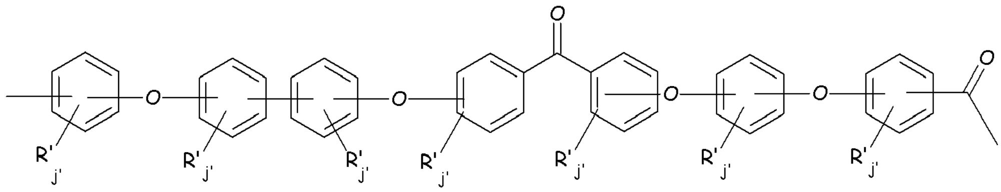

(J-H)

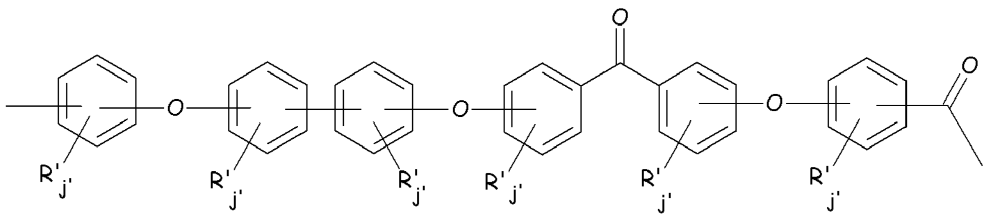

(J-I)

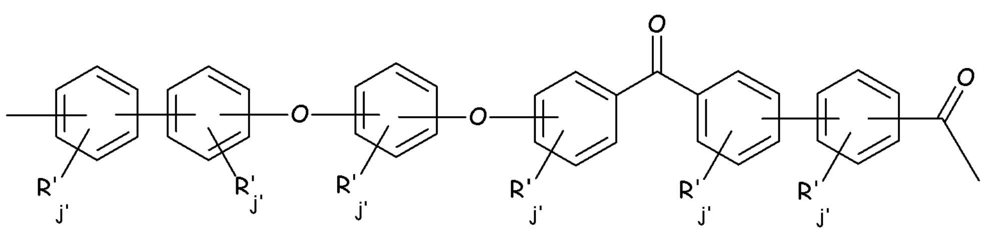

(J-J)

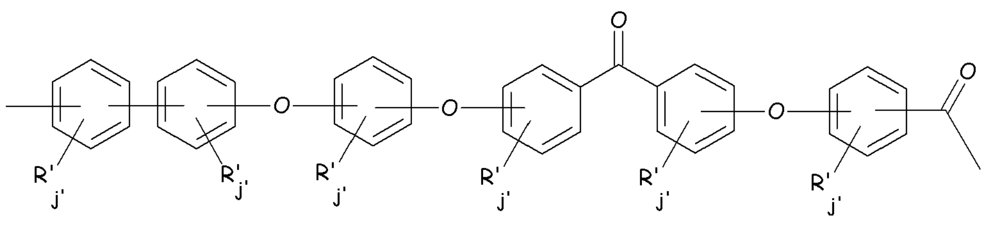

(J-K)

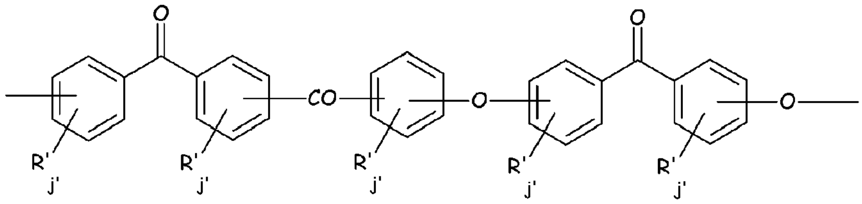 (J-L)

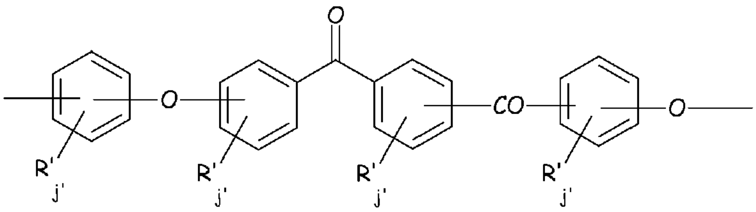 (J-M)

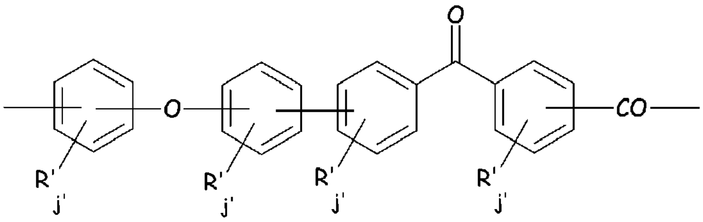 (J-N)

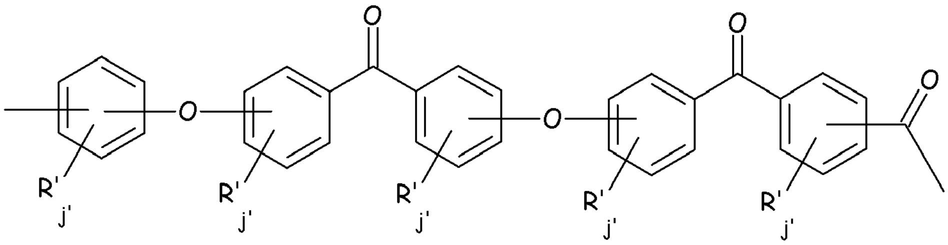 (J-O)

wherein:

- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j' is zero or is an integer from 0 to 4.

**5.** The polymer (b-PAEK) of claim 3, wherein said additional recurring units are recurring units ($R_c$) comprising a Ar-$SO_2$-Ar' group, with Ar and Ar', equal to or different from each other, being aromatic groups, said recurring units ($R_c$) generally complying with either of formulae:

: $-Ar^1-(T'-Ar^2)_n-O-Ar^3-SO_2-[Ar^4-(T-Ar^2)_n-SO_2]_m-Ar^5-O-$ (S1)

: $-E'-O-Ar^3-SO_2-(Ar^4-SO_2)_m-Ar^5-O-$ (S2)

wherein:

- $Ar^1$, $Ar^2$, $Ar^3$, $Ar^4$, and $Ar^5$, equal to or different from each other and at each occurrence, are independently a aromatic mono- or polynuclear group;
- T and T', equal to or different from each other and at each occurrence, is independently a bond or a divalent group optionally comprising one or more than one heteroatom; preferably T' is selected from the group consisting of a bond, $-CH_2-$, $-C(O)-$, $-C(CH_3)_2-$, $-C(CF_3)_2-$, $-C(=CCl_2)-$, $-C(CH_3)(CH_2CH_2\ COOH)-$, $-SO_2-$, and a group of

formula:

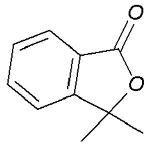

, and

preferably T is selected from the group consisting of a bond, $-CH_2-$, -C(O)-, $-C(CH_3)_2-$, $-C(CF_3)_2-$, $-C(=CCl_2)-$, $-C(CH_3)(CH_2CH_2COOH)-$, and a group of formula:

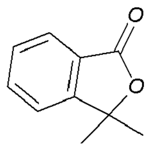

, and

- n and m, equal to or different from each other, are independently zero or an integer of 1 to 5;
- E' is a group selected from the group consisting of formulae (E'-I), (E'-II) and (E'-III):

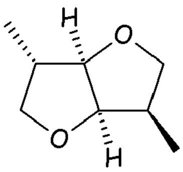 (E'-I) 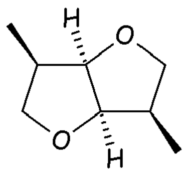 (E'-II) 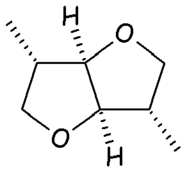 (E'-III) .

**6.** The polymer (b-PAEK) of claim 5, wherein said additional recurring units are recurring units ($R_c$) selected from the group consisting of those of formulae (S-A) to (S-F) herein below:

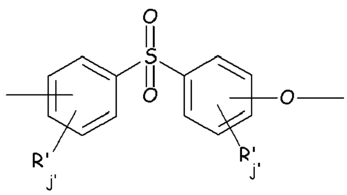 (S-A)

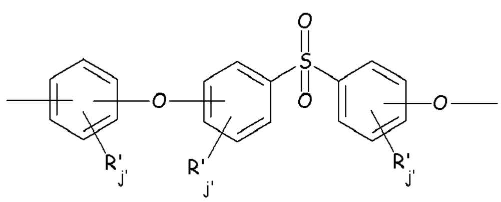 (S-B)

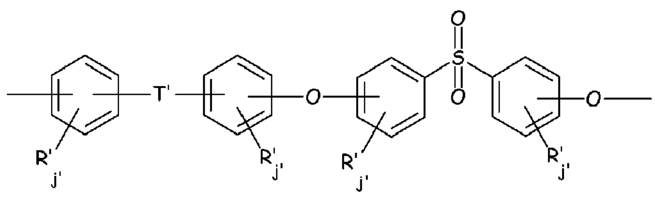 (S-C)

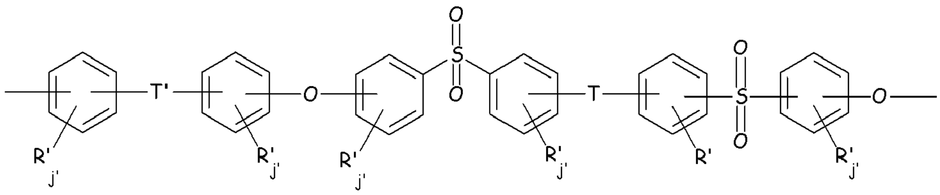 (S-D)

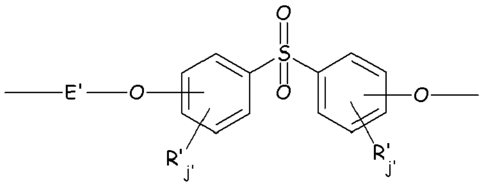 (S-E)

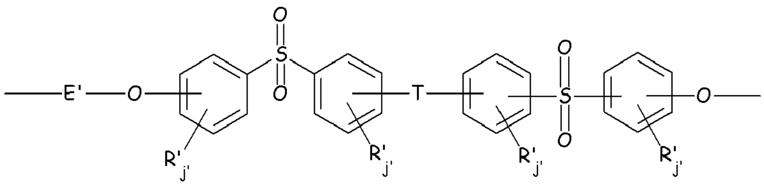 (S-F)

wherein:

- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j' is zero or is an integer from 0 to 4;
- T and T', equal to or different from each other are a bond or a divalent group optionally comprising one or more than one heteroatom; preferably T' is selected from the group consisting of a bond, $-CH_2-$, -C(O)-, $-C(CH_3)_2-$, $-C(CF_3)_2-$, $-C(=CCl_2)-$, $-C(CH_3)(CH_2CH_2COOH)-$, $-SO_2-$, and a group of formula:

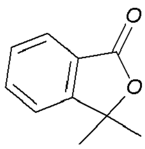 , and

preferably T is selected from the group consisting of a bond, $-CH_2-$, -C(O)-, $-C(CH_3)_2-$, $-C(CF_3)_2-$, $-C(=CCl_2)-$, $-C(CH_3)(CH_2CH_2COOH)-$, and a group of formula:

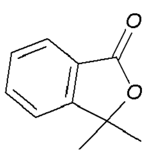 , and

- E' is a group selected from the group consisting of formulae (E'-I), (E'-II) and (E'-III):

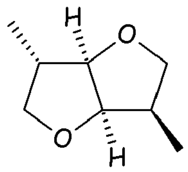 (E'-I) 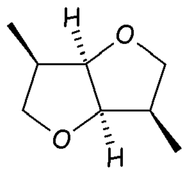 (E'-II) 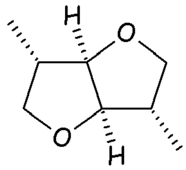 (E'-III).

**7.** The polymer (b-PAEK) of anyone of the preceding claims, said polymer (b-PAEK) having a polydispersity index of less than 2.5, preferably of less than 2.4, more preferably of less than 2.2.

**8.** A process for manufacturing the polyarylene ether ketone [polymer (b-PAEK)] according to anyone of the preceding claims, said process comprising reacting in a solvent mixture comprising a polar aprotic solvent:

- at least one 1,4:3,6-dianhydrohexitol [diol (AA)] selected from the group consisting of isosorbide (1), isomannide (2) and isoidide (3):

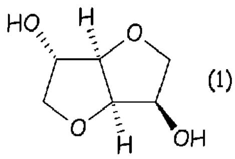 (1) 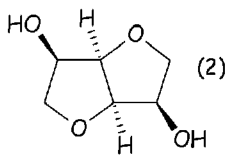 (2) 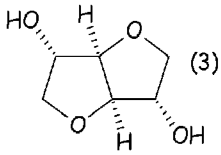 (3)

- at least one dihalobenzoid compound [dihalo (BB)] of formula:

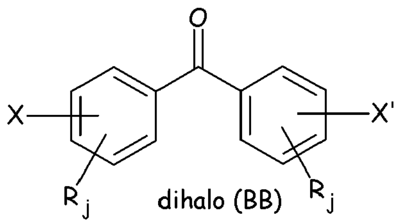
dihalo (BB)

wherein:
- each of R, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j is zero or is an integer from 1 to 4;
- X and X', equal to or different from each other, are independently a halogen atom, preferably Cl or F, more preferably F;
said diol (AA) and dihalo (BB) being reacted in substantially equimolecular amount,
in the presence of an alkali metal carbonate.

**9.** The process of claim 8, said process comprising additionally reacting in said solvent mixture at least one of:

- dihydroxyl compound [diol (A'A')] different from diol (AA), as above detailed;
- dihaloaryl compound [dihalo (B'B')] different from dihalo (BB), as above detailed; and
- a hydroxyl-halo compound [hydro-halo (A'B')],

wherein the process is intended to manufacture polymer (b-PAEK) comprising recurring units different from ($R_b$), and wherein the overall amount of halo-groups and hydroxyl-groups is substantially equimolecular.

**10.** The process of claim 9, said process comprising additionally reacting in said solvent mixture at least one dihaloaryl compound [dihalo(B'B')] different from dihalo (BB) selected from the group consisting of compounds of formula (S):

$X-Ar^3-SO_2-[Ar^4-(T-Ar^2)_n-SO_2]_m-Ar^5-X$ formula (S)
wherein:

- n and m, equal to or different from each other, are independently zero or an integer of 1 to 5;
- X is an halogen selected from F, Cl, Br, I ;
- each of $Ar^2$, $Ar^3$, $Ar^4$, $Ar^5$ equal to or different from each other and at each occurrence, is an aromatic moiety of the formula :

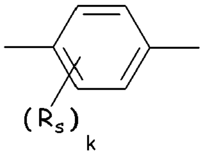 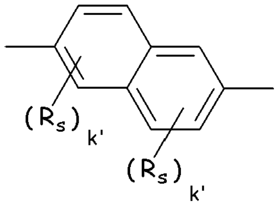 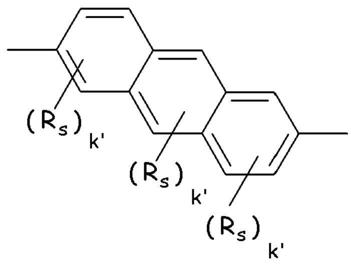

wherein:
- each $R_s$ is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- k is zero or an integer of 1 to 4; k' is zero or an integer of 1 to 3;
- T is a bond or a divalent group optionally comprising one or more than one heteroatom; preferably T is selected from the group consisting of a bond, $-CH_2$ -, -C(O)-, $-C(CH_3)_2-$, $-C(CF_3)_2-$, $-C(=CCl_2)-$, $-C(CH_3)(CH_2CH_2COOH)-$, and a group of formula:

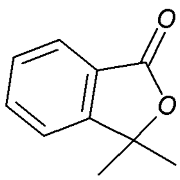 .

**11.** The process of claim 9, said process comprising additionally reacting in said solvent mixture at least one dihydroxyl compound [diols (A'A')] different from diol (AA) selected from the group consisting of compounds of formula (O):

$HO-Ar^1-(T'-Ar^2)_n-OH$ formula (O)
wherein:

- n is zero or an integer of 1 to 5;
- each of $Ar^1$ and $Ar^2$, equal to or different from each other and at each occurrence, is an aromatic moiety of the formula :

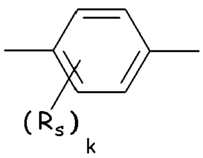 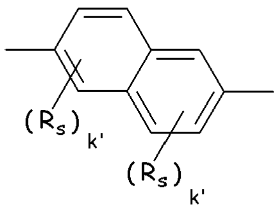 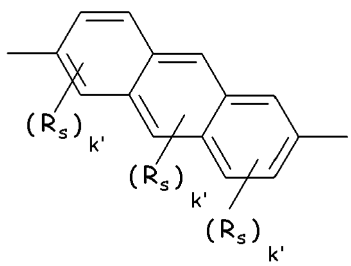

wherein:
- each $R_s$ is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- k is zero or an integer of 1 to 4; k' is zero or an integer of 1 to 3;
- T' is a bond or a divalent group optionally comprising one or more than one heteroatom; preferably T' is

selected from the group consisting of a bond, $-SO_2$ -, $-CH_2-$, -C(O)-, $-C(CH_3)_2-$, $-C(CF_3)_2-$, $-C(=CCl_2)-$, $-C(CH_3)(CH_2CH_2COOH)-$, and a group of formula:

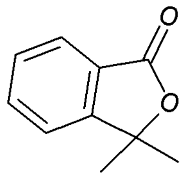

.

**12.** Use of the polyarylene ether ketone [polymer (b-PAEK)] of anyone of claims 1 to 7 for the manufacture of membranes, films and sheets, and three-dimensional moulded parts.

**13.** Use according to claim 12, wherein said polymer (b-PAEK) is processed by melt processing (including injection moulding, extrusion moulding, compression moulding), and/or by solution processing.

**14.** Shaped articles manufactured from polymer (b-PAEK) of anyone of claims 1 to 7 selected from the group consisting of melt processed films, solution processed films, melt process monofilaments and fibers, solution processed monofilaments, hollow fibers and solid fibers, and injection and compression molded objects.

**15.** Shaped articles manufactured from polymer (b-PAEK) of anyone of claims 1 to 7 selected from membranes for bioprocessing and medical filtrations, including hemodialysis membranes, membranes for food and beverage processing, membranes for waste water treatment and membranes for industrial process separations involving aqueous media.

**16.** Shaped articles manufactured from the polymer (b-PAEK) of anyone of claims 1 to 7 selected from films and sheets.

**17.** Shaped articles manufactured from polymer (b-PAEK) of anyone of claims 1 to 7 selected from three-dimensional moulded parts, in particular transparent or coloured parts for medical and dental applications.

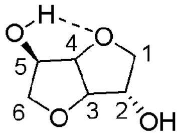

1

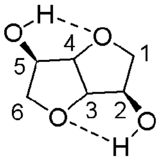

2

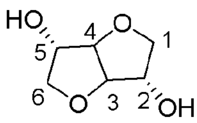

3

Fig. 1

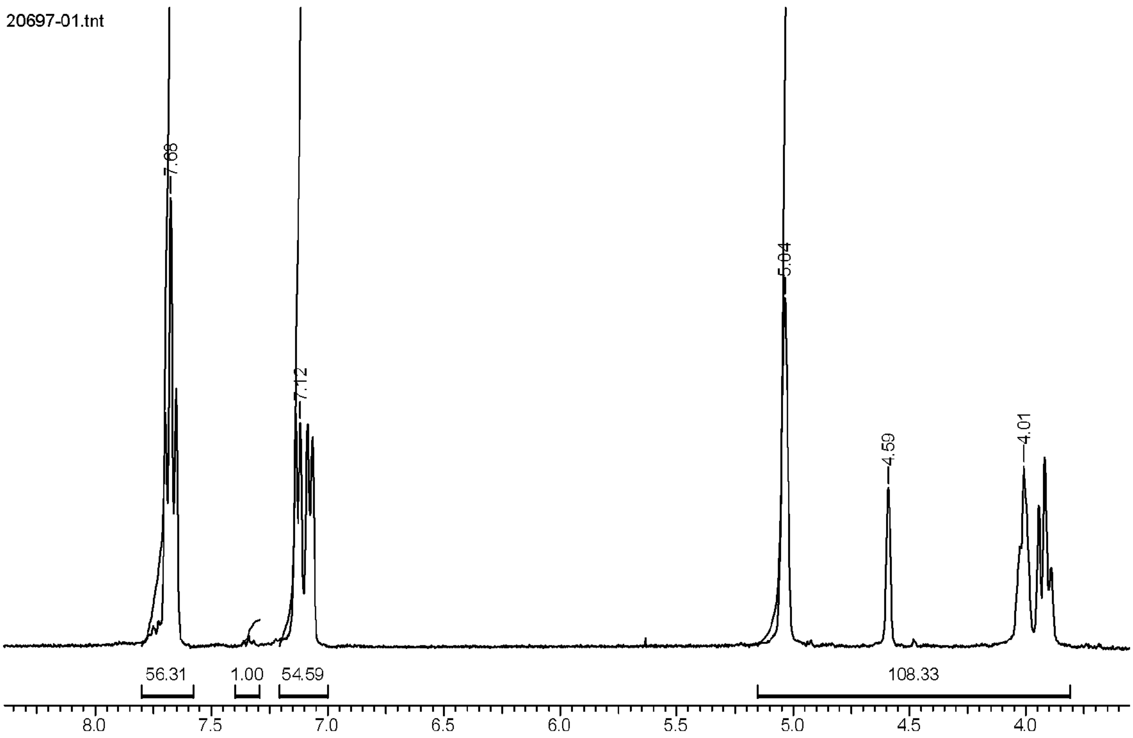


Fig. 2

Europäisches Patentamt
European Patent Office
Office européen des brevets

# EUROPEAN SEARCH REPORT

Application Number
EP 11 18 8634

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KRICHELDORF H.C. ET AL: "New Polymer Syntheses LXXXII", JOURNAL OF POLYMER SCIENCE PART A: POLYMER CHEMISTRY, vol. 33, 1995, pages 2667-2671, XP002674685, * abstract; table IV * ----- | 1-17 | INV. C08G65/40 C08G75/23 B01D69/12 |
| Y,D | US 6 608 167 B1 (HAYES RICHARD [US] ET AL) 19 August 2003 (2003-08-19) * column 13, line 20 - line 28 * ----- | 1-17 | |
| Y | CHATT ET AL: "Poly(ether sulfone) of Isosorbide", HIGH PERFORMANCE POLYMERS, vol. 21, no. 1, 2009, pages 105-118, XP008151327, * the whole document * ----- | 1-17 | |
| A | FENOUILLOT ET AL: "Polymers from renewable 1.4:3,6 -dianhydrohexitols", PROGRESS IN POLYMER SCIENCE, 2010, pages 578-622, XP002674686, * table 23 * ----- | 1-17 | TECHNICAL FIELDS SEARCHED (IPC) C08G C08F |

The present search report has been drawn up for all claims

| Place of search | Date of completion of the search | Examiner |
|---|---|---|
| The Hague | 25 April 2012 | O'Sullivan, Timothy |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 11 18 8634

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2012

| Patent document cited in search report | Publication date | Patent family member(s) | Publication date |
|---|---|---|---|
| US 6608167 B1 | 19-08-2003 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6608167 B
- WO 0200763 A
- WO 0200271 A